Europäisches Patentamt

European Patent Office

Office européen des brevets

(19)

(11) Veröffentlichungsnummer : **0 122 516**
**B1**

(12) ## EUROPÄISCHE PATENTSCHRIFT

(45) Veröffentlichungstag der Patentschrift :
21.01.87

(21) Anmeldenummer : 84103343.4

(22) Anmeldetag : 27.03.84

(51) Int. Cl.⁴ : **C 08 L 51/04, C 08 L 51/00,**
**C 08 L 33/08 // (C08L51/04,**
**33:08),(C08L51/00,**
**33:08),(C08L33/08,**
**51:04),(C08L33/08,**
**51:00),(C08L33/08, 55:02)**

(54) Weiche Polymerlegierungen.

(30) Priorität : 07.04.83 DE 3312542

(43) Veröffentlichungstag der Anmeldung :
24.10.84 Patentblatt 84/43

(45) Bekanntmachung des Hinweises auf die Patenterteilung : 21.01.87 Patentblatt 87/04

(84) Benannte Vertragsstaaten :
DE FR GB IT

(56) Entgegenhaltungen :
DE-A- 3 313 385

(73) Patentinhaber : BAYER AG
Konzernverwaltung RP Patentabteilung
D-5090 Leverkusen 1 Bayerwerk (DE)

(72) Erfinder : Lindner, Christian, Dr.
Riehlerstrasse 200
D-5000 Köln 60 (DE)
Erfinder : Braese, Hans-Eberhard
Kaethe-Kollwitz-Strasse 3
D-5000 Köln 71 (DE)
Erfinder : Ott, Karl-Heinz, Dr.
Paul-Klee-Strasse 54
D-5090 Leverkusen (DE)
Erfinder : Uerdingen, Walter, Dr.
Humperdinckstrasse 41
D-5090 Leverkusen (DE)

0 122 516

## Beschreibung

Die Erfindung betrifft weiche Polymerlegierungen, die sich zur Herstellung flexiber Formmassen erhöhter Alterungsstabilität bzw. besserer Lösungsmittelbeständigkeit eignen, auf der Basis von Pfropfpolymerisaten und vernetzten teilchenförmigen Acrylatcopolymerisaten..

Mit Weichmachern kann man Dehnung, Flexibilität, Verarbeitbarkeit und Zähigkeit gebräuchlicher Kunststoffe verbessern. Allerdings können Weichmacher bei Langzeitgebrauch aus dem Kunststoff migrieren und damit dessen Eigenschaften verschlechtern. Manche Kunststoffe, z. B. Styrol/Acrylnitrilharze lassen sich mit Butadienacrylnitrilcopolymeren mischen. Dabei resultieren relativ weiche Polymerlegierungen, die allerdings wegen ihres Gehalts an Dienpolymerisaten nicht alterungsstabil sind. Gesucht werden demnach Polymerlegierungen mit den Eigenschaften von weichgemachten Kunststoffen, die keine zur Migration befähigten Weichmacher enthalten, und in denen ggf. Dienkautschuke nur in möglichst geringer Menge enthalten sind.

Gegenstand der Erfindung sind Polymerlegierungen aus

A) 95 bis 20 Gew.-%, bevorzugt 70 bis 30 Gew.-%, eines Pfropfproduktes eines Gemischs aus 20 bis 40 Gew.-Teilen Acrylnitril und 80 bis 60 Gew.-% Styrol, $\alpha$-Methylstyrol, Methylmethacrylat oder Mischungen daraus auf einen teilchenförmigen, hochvernetzten Dien- oder Alkylacrylatkautschuk mit einem mittleren Teilchendurchmesser ($d_{50}$) von 0,1 bis 2,0 $\mu$m und einem Gelgehalt von 30-85 Gew-%, mit einem Gesamtkautschukgehalt von 20 bis 50 Gew.-% und

B) 5 bis 80 Gew.-%, bevorzugt 30 bis 70 Gew.-%, eines teilchenförmigen vernetzten kautschukartigen Copolymerisats eines Alkylacrylats mit (bezogen auf Copolymerisat) 20 bis 40 Gew.-% Acrylnitril und/oder Methylmethacrylat, welches einen mittleren Teilchendurchmesser ($d_{50}$) von 0,05 bis 0,6 $\mu$m, einen Gelgehalt von 80-99 Gew.-% (in Dimethylformamid bei 25 °C) und einen Quellungsgrad von 10 bis 40 (in Dimethylformamid bei 25 °C) besitzt.

Besonders bevorzugte Copolymerisate B) werden durch radikalische Emulsionspolymerisation von Mischungen aus 20 bis 40 Gew.-%, bevorzugt 25 bis 35 Gew.-%, Acrylnitril und 80 bis 40 Gew.-%, bevorzugt 75 bis 65 Gew.-%, Alkylacrylat unter Mitverwendung von bis zu 1 Gew.-%, bezogen auf Acrylnitril-Alkylacrylat-Gemisch, einer polyfunktionellen Allyl- oder Vinylverbindung als Vernetzer hergestellt.

Bevorzugte Pfropfprodukte A) sind teilchenförmige, hochvernetzte Alkylacrylatkautschuke, auf die Styrol/Acrylnitril-Mischungen aufgepfropft wurden.

Copolymerisate B) können durch radikalische Emulsionspolymerisation entsprechender Monomermischungen hergestellt werden.

Bevorzugte Vernetzer sind Triallylcyanurat, Triallylisocyanurat, Vinylether polyfunktioneller Alkohole, Vinylester polyfunktioneller Carbonsäuren, Polyesterglykolpolyacrylate, Polyetherglykolpolyacrylate.

Die Pfropfprodukte A) werden durch Pfropfpolymerisation in Emulsion, Suspension oder Lösung hergestellt und sind bekannt. Als Pfropfbasis können Dienkautschuke, insbesondere Polybutadien-, Butadienacrylnitril- und Butadienstyrolcopolymerisate verwendet werden. Acrylatkautschuke mit vernetzter teilchenförmiger Struktur, bevorzugt mit mittleren Teilchendurchmessern ($d_{50}$) von 0,2-0,6 $\mu$m, sind besonders geeignet.

Besonders bevorzugt sind teilchenförmige Pfropfpolymerisate aus einem Kern, der einen stark vernetzten Dienkautschuk darstellt, einer ersten Hülle, die einen vernetzten Acrylatkautschuk darstellt, und einer zweiten Hülle, die ein Polymerisat oder Copolymerisat aus harzbildenden Monomeren, z. B. Styrol und Acrylnitril, darstellt.

Diese Pfropfpolymerisate sind in der DE-OS 3 006 804 beschrieben.

Die Pfropfprodukte A) enthalten 20 bis 50 Gew.-% Kautschuk, insbesondere 20 bis 40 Gew.-%, und weisen Gelgehalte, gemessen in Dimethylformamid bei 25 °C, von 30-85 Gew.-%, insbesondere 40-70 Gew.-%, auf. Als Pfropfmonomere sind Styrol, $\alpha$-Methylstyrol, Acrylnitril, Methylmethacrylat oder Mischungen davon geeignet, insbesondere Mischungen von Acrylnitril und gegebenenfalls kleineren Mengen Methylmethacrylat mit Styrol, die wenigstens 20 Gew.-% Acrylnitril enthalten. Die Pfropfprodukte A) werden durch Polymerisation dieser Monomeren in Gegenwart der teilchenförmigen Dien- oder Acrylatkautschuke hergestellt.

Die Alkylacrylat-Copolymerisate B) können durch radikalische Emulsionspolymerisation bei Temperaturen von 30-90 °C, bevorzugt 40 bis 85 °C, von Monomermischungen aus 20 bis 40 Gew.-% Acrylnitril und/oder Methylmethacrylat und 80 bis 60 Gew.-% Alkylacrylat mit bis zu 10 C-Atomen in der Alkylgruppe hergestellt werden, wobei starke Vernetzungen der Copolymerisate und großer Quellungsgrad gewährleistet sein müssen. Die Copolymerisate B) besitzen einen Gelgehalt von 80-99 Gew.-%, insbesondere von 90-99 Gew.-% und Quellungsindices von 10 bis 40, insbesondere von 15 bis 25. Starke Vernetzung (ausgedrückt durch den Gelgehalt) bei relativ geringer Vernetzungsdichte (ausgedrückt durch den Quellungsindex) erreicht man z. B., wenn man bei der Herstellung durch Emulsionspolymerisation bis zu 1 Gew.-% polyfunktionelle copolymerisierbare Allylverbindungen mitverwendet. Geeignet sind Triallylverbindungen wie Triallyl(iso) cyanuarate.

Die erfindungsgemäßen Polymerlegierungen können erhalten werden, indem man ihre Bestandteile A) und B) miteinander bei höheren Temperaturen, insbesondere 100 bis 250 °C, mischt, z. B. in Knetern,

2

auf Walzenstühlen oder in Schnekkenmaschinen, fallen A) und B) als Emulsion, Suspension oder Lösung an, so kann man diese mischen und gemeinsam aufarbeiten.

Die Legierungen können übliche Additive wie Antioxidantien, Alterungsschutzmittel, Gleitmittel, Füllstoffe, Pigmente, Antistatika in den üblichen Mengen enthalten.

Die Legierungen können übliche Additive wie Antioxidantien, Alterungsschutzmittel, Gleitmittel, Füllstoffe, Pigmente, Antistatika in den üblichen Mengen enthalten.

Die erfindungsgemäßen Legierungen sind relativ weiche flexible thermoplastische Formmassen mit guten Fließeigenschaften bei Extrusion, Kalandrierung und Spritzguß. Insbesondere Legierungen aus gepfropften und ungepfropten Alkylacrylatcopolymerisaten besitzen verbessertes Alterungsverhalten, wesentlich erhöhte Lösungsmittelbeständigkeit und für die thermoplastische Verarbeitung günstigere rheologische Eigenschaften im Vergleich zu entsprechenden Mischungen, die Dien/Acrylnitril-Copolymerisate enthalten.

Die erfindungsgemäßen Legierungen können z.B. in Kraftfahrzeugen als Verkleidungsfolien, spritzgegossene Konsolen und andere nicht-tragende Konstruktionsteile verwendet werden, wo es darauf ankommt, daß kein Weichmacher ausschwitzen kann. Vorzugsweise eignen sich die Legierungen zur Herstellung von Kaschierfolien : Solche Folien können z. B. auf eine Schicht aus ABS oder einem ABS-Polyvinylchlorid-Gemisch aufkaschiert werden und bilden dann weiche lichtstabile, prägefähige Oberflächen oder Oberflächen mit verbesserter Lösungsmittelbeständikeit. Die Legierungen eignen sich auch zur Coextrusion mit lichtempfindlichen Polymeren. Man kann so « Sandwich »-Platten mit einem Kern aus ABS und einer Außenschicht aus den erfindungsgemäßen Polymerlegierungen herstellen. Dieses Material eignet sich zur Herstellung von Rohren, Profilen, Hohlkörpern und Verkleidungen.

Gelgehalte und Quellungsindices wurden in Dimethylformamid bei 25 °C ermittelt (vgl. M. Hoffmann et al., Polymeranalytik II, Georg Thieme Verlag Stuttgart 1977). Die Teilchengrößen stellen mittlere Teilchendurchmesser $d_{50}$ dar (siehe dazu « Ultrazentrifugenmessungen » W. Scholtan et al. Kolloidz. u. Z. Polymere 250 (1972) 783-796).

. Beispiele

I. Polymerisate A)

1) ABS-Pfropfpolymerisat, erhalten durch Polymerisation von 70 Gew.-Teilen eines Styrol/Acrylnitrilgemischs (Gew.-Verhältnis 66 : 34) in Gegenwart von 30 Gew.-Teilen (bezogen auf Feststoff) eines Polybutadienlatex mit einem mittleren Teilchendurchmesser von 0,4 µm.

2) AAS-Pfropfpolymerisat, erhalten durch Polymerisation von 70 Gew.-Teilen eines Gemisches aus Styrol und Acrylnitril (Gew.-Verhältnis 66 : 34) in Gegenwart von 30 Gew.-Teilen (bezogen auf Feststoff) eines hochvernetzten Poly-n-butylacrylatlatex mit einem mittleren Teilchendurchmesser von 0,45 µm.

Das Produkt wurde gemäß DE-OS 3 006 804 hergestellt.

II. Copolymerisate B)

1) Acrylnitril-Butadien-Kautschuk mit einem mittleren Teilchendurchmesser von 0,15 µm und Acrylnitrilgehalt von 30 Gew.-%, mit einem Gelanteil von 90 Gew.-% und einem Quellungsindex von 19.

2) Alkylacrylatcopolymerkautschuk

In einem Reaktor werden vorgelegt 32,7 Gew.-Teile Wasser, 0,095 Gew.-Teile Natriumsalz von $C_9$-$C_{14}$-Alkylsulfonsäure und 5,7 Gew.-Teile einer Mischung aus 69,69 Gew.-% n-Butylacrylat, 0,442 Gew.-% Triallylcyanurat und 29,86 Gew.-% Acrylnitril. Bei 65 bis 67 °C wird die Polymerisation durch Zugabe von 0,095 Gew.-Teilen Kaliumpersulfat in 2,4 Gew.-Teilen Wasser initiiert. Anschließend werden bei der angegebenen Temperatur folgende Lösungen innerhalb von 5 Stunden zudosiert :

Lösung a)
69,633 Gew.-Teile der oben angegebenen monomeren Mischung
Lösung b)
85  Gew.-Teile Wasser plus
1,5 Gew.-Teile Natriumsalz von $C_9$-$C_{14}$-Alkylsulfonsäuren.

Anschließend wird 4 Stunden bei 67 °C nachpolymerisiert.

III. Eigenschaften der erfindungsgemäßen Legierungen

Nach Stabilisierung mit 1,2 Teilen phenolischer Antioxidantien pro 100 Teile Polymermischung wurden folgende Legierungen hergestellt (durch 10-minütiges Walzen bei 175 °C eines durch gemeinsame Fällung entsprechender Latexmischungen hergestellten pulverförmigen Materials) :

1) 50 Teile Pfropfpolymer I 1)       Vergleich
   50 Teile Kautschuk      II 1)

3

2) 50 Teile Pfropfpolymer I 1)
   50 Teile Kautschuk    II 2)

3) 50 Teile Pfropfpolymer I 2)
   50 Teile Kautschuk    II 2)

Chemikalienbeständigkeit : Lagerung bei 23 °C/24 h einer Preßplatte, gemessen wird die Gewichtsänderung in g :
Produkt Medium

| Produkt | Medium | | |
|---|---|---|---|
| | Benzin | Toluol/Isooctan 50     50 | Trichlorethylen |
| III 1) | + 0,096 | + 0,537 | Platte zerfallen |
| III 2) | + 0,028 | + 0,230 | + 0,949 |
| III 3) | + 0,039 | + 0,391 | + 1,130 |

Wie aus der Tabelle ersichtlich ist, werden die erfindungsgemäßen Formmassen wesentlich geringfügiger von den Lösungsmitteln angegriffen.

Mechanische Eigenschaften

Siehe nachfolgende Tabellen.

| Produkt | Kugeldruckhärte DIN 53456 (MPa) 30″ | Kerbschlagzähigkeit DIN 53453 23 °C | | Dehnung DIN 53455 $\varepsilon_R$ (%) | Zugfestigkeit DIN 53455 $\delta_R$ (MPA) |
|---|---|---|---|---|---|
| | | (Pa) | (kg/m²) | | |
| III 1) | 7,8 | 200,06 | (20,4) | 60 | 6,6 |
| III 3) | 26,5 | 270,66 | (27,6) | 192 | 27,8 |

| Produkt | Wärmeformbeständigkeit VicatA (DIN 534); VicatB (DIN 53460) | | Dehnung DIN 53455, $\varepsilon_R$ (%) | Shore Härte D |
|---|---|---|---|---|
| III 1) | 67 °C | zu weich | 60 | 36 |
| III 2) | 99 °C | 46 °C | 176 | 63 |
| III 3) | 93 °C | 43 °C | 112 | 61 |

Wie aus den Tabellen ersichtlich ist, besitzen die erfindungsgemäßen Formmassen gegenüber NBR-haltigen Massen verbesserte Wärmeformbeständigkeit, höhere Zähigkeit und größere Dehnung. Bei Lichtalterung der Massen zeigt sich, daß die Alterung (Abfall mech. Werte) in folgender Reihe verbessert wird III1) < III2) < III3).

0 122 516

**Patentanspruch**

Polymerlegierungen aus
A) 95-20 Gew.-%, bevorzugt 70 bis 30 Gew.-%, eines Pfropfprodukts eines Gemisches aus 20-40 Gew.-Teilen Acrylnitril und 80-60 Gew.-Teilen Styrol, $\alpha$-Methylstyrol, Methylmethacrylat oder Mischungen daraus auf einen teilchenförmigen, vernetzten Dien- oder Alkylacrylatkautschuk mit einem mittleren Teilchendurchmesser ($d_{50}$) von 0,1 bis 2,0 $\mu$m und einem Gelgehalt von 30-85 Gew.-%, mit einem Gesamtkautschukgehalt von 20-50 Gew.-% und
B) 5 bis 80 Gew.-%, bevorzugt 30 bis 70 Gew.-%, eines teilchenförmigen vernetzten kautschukartigen Copolymerisats eines Alkylacrylates mit bis zu 10 C-Atomen in der Alkylgruppe mit (bezogen auf Copolymerisat) 20 bis 40 Gew.-% Acrylnitril und/oder Methylmethacrylat, welches einen mittleren Teilchendurchmesser ($d_{50}$) von 0,05 bis 0,6 $\mu$m, einen Gelgehalt von 80 bis 99 Gew.-% (in Dimethylformamid bei 25 °C) und einen Quellungsgrad von 10 bis 40 (in Dimethylformamid bei 25 °C) besitzt.

**Claim**

Polymer alloys of
A) 95-20 % by weight, preferably 70 to 30 % by weight, of a graft product of a mixture of 20-40 parts by weight of acrylonitrile and 80-60 parts by weight of styrene, $\alpha$-methylstyrene, methyl methacrylate or mixtures thereof on a particulate, cross-linked diene or alkyl acrylate rubber with an average particle diameter ($d_{50}$) of 0.1 to 2.0 $\mu$m and a gel content of 30-85 % by weight, with a total rubber content of 20-50 % by weight and
B) 5 to 80 % by weight, preferably 30 to 70 % by weight of a particulate cross-linked rubber-like copolymer of an alkyl acrylate with up to 10 C atoms in the alkyl group and (based on copolymer) 20 to 40 % by weight of acrylonitrile and/or methyl methacrylate, which has an average particle diameter ($d_{50}$) of 0.05 to 0.6 $\mu$m, a gel content of 80 to 99 % by weight (in dimethyl formamide at 25 °C) and a degree of swelling of 10 to 40 (in dimethyl formamide at 25 °C).

**Revendication**

Combinaisons de polymères consistant en :
A) 95 à 20 % en poids, de préférence 70 à 30 % en poids, d'un produit de greffage d'un mélange de 20 à 40 parties en poids d'acrylonitrile et 80 à 60 parties en poids de styrène, d'$\alpha$-méthylstyrène, de méthacrylate de méthyle ou d'un mélange de ces monomères sur un caoutchouc de diène ou d'acrylate d'alkyle réticulé à l'état de particules, à un diamètre de particules moyen ($d_{50}$) de 0,1 à 2,0 $\mu$m et une teneur en gel de 30 à 85 % en poids, avec une teneur totale en caoutchouc de 20 à 50 % en poids et
B) 5 à 80 % en poids, de préférence 30 à 70 % en poids, d'un copolymère réticulé à l'état de particules, du type caoutchouc, d'un acrylate d'alkyle contenant jusqu'à 10 atomes de carbone dans le groupe alkyle avec (par rapport au copolymère) 20 à 40 % en poids d'acrylonitrile et/ou de méthacrylate de méthyle, qui présente un diamètre de particules moyen ($d_{50}$) de 0,05 à 0,6 $\mu$m, une teneur en gel de 80 à 99 % en poids (dans le diméthylformamide à 25 °C) et un degré de gonflement de 10 à 40 (dans le diméthylformamide à 25 °C).